# EUROPÄISCHE PATENTSCHRIFT

(11) **EP 2 322 810 B1**
(45) Veröffentlichungstag und Bekanntmachung des Hinweises auf die Patenterteilung: **21.03.2012**
(21) Anmeldenummer: 10401196.0
(22) Anmeldetag: 12.11.2010
(51) Int. Cl.: F16B 5/06, F16B 13/08, F16B 19/10, F16F 9/54, D06F 37/22, F16B 13/12

(54) **Verbindungselement für einen Schwingungsdämpfer einer Wäschebehandlungsmaschine**
Connection element for a vibration damper of a laundry treatment machine
Elément de liaison pour un amortisseur d'oscillation d'une machine de traitement de linge

(30) Priorität: 17.11.2009 DE 102009044557
(43) Veröffentlichungstag der Anmeldung: 18.05.2011
(73) Patentinhaber: Miele & Cie. KG, 33332 Gütersloh (DE)
(72) Erfinder: Adam, Guido, 33106 Paderborn (DE); Eckert, Norbert, 33102 Paderborn (DE); Hollenhorst, Matthias, 59556 Lippstadt (DE)

(56) Entgegenhaltungen:
- EP-A1- 1 980 661
- WO-A1-2009/063341
- DE-A1- 19 725 706
- DE-A1-102005 008 239
- DE-U1-202006 013 666

## Beschreibung

Die Erfindung betrifft ein Verbindungselement für einen Schwingungsdämpfer, der zur gedämpften Festlegung eines in einem Gehäuse einer Wäschebehandlungsmaschine angeordneten Laugenbehälters mit drehbar gelagerter Trommel vorgesehen ist, wobei das Verbindungselement im eingesetzten Zustand ein Befestigungsauge des Schwingungsdämpfers sowie beidseits angeordnete Laschen am Laugenbehälter durchdringt, und wobei eine Spreizung des Verbindungselements im montierten Zustand eine verspannende Kraftübertragung zwischen dem Befestigungsauge und den Laschen bewirkt.

Schwingungsdämpfer an schwingenden Aggregaten von Wäscheautomaten haben die Aufgabe, in ihrer Wirkungsrichtung die Bewegung bei Unwucht durch Wäsche zu dämpfen und ein Anschlagen oder den Versatz des Gerätes zu verhindern. Torsionsbewegungen des Laugenbehälters um die Trommelachse werden jedoch nur durch die damit verbundene Verschiebung des Befestigungspunktes in die Stoßdämpfer eingeleitet. Die Befestigungspunkte des Dämpfers am Laugenbehälter und an der gehäuseseitigen Befestigung können auch Drehmomente übertragen. Bei Stahlaggregaten und Bodenwannen ist die Übertragungsmöglichkeit durch eine stark angeschraubte Verbindung gegeben, die über die Vorspannkraft eine kraftschlüssige Verbindung erzeugt. Das ist in dieser Form bei Kunststofflaugenbehältern nicht durchführbar, da die erforderliche Kraft den Kunststoff schädigen würde und eine Relaxion ein schnelles Absinken der Vorspannung zur Folge hat.

Zur Bereitstellung einer möglichst schwingungsgedämpften Schwenkachse wird gemäß dem Stand der Technik in der DE 197 25 706 A1 eine Befestigungseinrichtung offenbart, bei der das Befestigungselement aus zwei quer zur Schwenkachse angeordneten aufspreizbaren Hülsensegmenten besteht. Die Hülsensegmente werden hierbei durch ein in sie eingeführtes, im Wesentlichen zylindrisches Spreizelement aufgeweitet, so dass sich die Hülsensegmente an den Wandbereichen des Befestigungsauges verspannen und so der Kraftschluss hergestellt wird. Dabei sind die Hülsensegmente wiederum in zwei miteinander fluchtenden Bohrungen zweier Wannen der Lagerböcke gelagert. Diese Wannen nehmen jeweils die Gelenkbüchsen zwischen sich auf. Auch wenn infolge der Aufspreizung des Befestigungselementes eine gewisse Versteifung der Schwenkachse gegeben ist, so ist diese bekannte Spreizhülse nicht verwendbar für Kunststofflaugenbehälter und hier insbesondere für die an dem Kunststofflaugenbehälter angeformten Laschen.

Aus der WO 2009/0063341 A1 ist ein ähnliches Verbindungselement zur Befestigung eines Schwingungsdämpfers am bodenseitigen Gehäuseteil einer Waschmaschine bekannt.

Denn die Befestigung eines Reibungsdämpfers an einem Kunststofflaugenbehälter stellt eine besondere Komplexität dar, da speziell die großen Kräfte, die vom Laugenbehälter auf den Dämpfer übertragen werden müssen, sich oft negativ auf die Struktur der Anbindungsgeometrie des Laugenbehälters auswirken. Zyklische Belastungen des Kunststoffes in den Anbindungsgeometrien begünstigen das Ausschlagen von Löchern zu Langlöchern. Dies führt zur Geräuschemissionen und zum Versagen der Verbindung. Das Umgehen einer kraftschlüssigen Lösung ist auch durch eine reine formschlüssige Lösung nur bedingt möglich. Dies erfordert eine Positionierung aller Komponenten der Verbindung untereinander, womit ein erheblicher zeitlicher Aufwand bei der Montage einhergeht.

Daher gilt es eine Lösung für das Problem zu entwickeln, die sowohl eine schnelle Montage als auch eine sichere Verbindung herstellt, wobei die Kosten gering zu halten sind. Der aktuelle Stand der Technik löst das oben beschriebene Problem durch eine kraftschlüssige Verbindung. Bei dieser Verbindung wird eine Stahlhülse, die innerhalb des Dämpfungsgummis eingebracht ist, durch eine Schraube und eine Mutter verspannt. Ein gebogenes Blechteil wird zusätzlich in die Verbindung eingebracht, damit die wirkenden Kräfte auf große Flächen verteilt werden. In dem Blech ist die Mutter bereits integriert. Der besonders große Nachteil dieser Lösung besteht darin, dass die Kosten, die für den zusätzlichen Blecheinleger benötigt werden, äußerst hoch sind.

Die DE 20 2006 013 666 U1 offenbart ein als Schnellverschluss ausgebildetes Befestigungselement, bei dem ein pilzförmiges Element mit seinem Schaft in einen Hülsenkörper eingesteckt werden kann. Zur Verriegelung des pilzförmigen Elements umfasst dieses an seinem Ende hakenförmige Anformungen, die beim Verdrehen in einen Hinterschnitt verfahrbar sind und somit ein Herauswandern unterbunden wird. Zur Verdrehsicherung ist der Schaft im Querschnitt oval ausgebildet, wobei diese Form mit entsprechend korrespondierenden, innerhalb der Hülse angeformten Federelementen den Schaft in die bevorzugte Befestigungsposition hält.

Der Erfindung stellt sich somit das Problem eine Verbindungselement für einen Schwingungsdämpfer bereit zu stellen, der die geschilderten Nachteile überwindet, wobei die Verbindung einerseits eine schnelle Montage als auch eine sichere Verbindung herstellt, und wobei andererseits insbesondere die Kosten einer derartigen Verbindung gering ausfallen. Erfindungsgemäß wird dieses Problem durch ein Verbindungselement mit den Merkmalen des unabhängigen Anspruchs 1 gelöst. Vorteilhafte Ausgestaltungen der Erfindung ergeben sich aus den nachfolgenden abhängigen Ansprüchen.

Die mit der Erfindung erreichbaren Vorteile bestehen darin, dass infolge der besonderen Ausgestaltung einer Dübelstiftlösung für die Herstellung der Verbindung zwei Teile zu verwenden sind, wobei diese Teile eine schnelle und einfache Montage darstellen. Dabei wirkt die Verbindung derart, dass sie neben einer Kraftschluss- auch eine Formschlussverbindung eingeht, so dass die im verspannten Zustand verbrachten Teile einmal die erforderliche Kraftübertragung bereitstellen, und zudem infolge des zueinander findenden Formschlusses gegen ein selbstständiges Lösen gesichert sind. Die Verbindung stellt dadurch eine geringere Geräuschemission bereit, wobei sie im montierten Zustand visuell im Hinblick auf ihren korrekten Sitz prüfbar ist, und somit die gesicherte Lage erkennbar ist.

Erfindungsgemäß wird dies dadurch gelöst, dass das Verbindungselement aus einem Hülsenkörper besteht, in den ein als Stift mit elliptischem Querschnitt ausgebildeter Spreizkörper einsteckbar ist, und wobei durch eine zumindest etwa 90°-Drehung des Stiftes in dem Hülsenkörper die verspannende Kraftübertragung erfolgt. Hierbei wird eine Aufdickung des Hülsenkörpers erwirkt, wodurch der Hülsenkörper dann innerhalb der Aufnahmebohrungen in den Laschen am Laugenbehälter und innerhalb der Bohrung im Befestigungsauge des Dämpfers gepresst bzw. verspannt wird. Diese Ausbildung ermöglicht es nun, dass durch eine einfache vorgegebene 90°-Verschwenkung des Stiftes die Kraft übertragende Verspannung herbeigeführt wird. Hierzu werden die entsprechend elliptisch geformten Körper zueinander in Wirkverbindung gebracht, so dass der Hülsenkörper sich hier gegen die Flächen des Befestigungsauges verspannt.

Erfindungsgemäß umfasst der Hülsenkörper ferner im Querschnitt eine elliptische Öffnung zur Aufnahme des Spreizkörpers, so dass die inneren Flächen der Wände elliptisch geformt sind. Hierbei können auch die Wände selbst, in der quergeschnittenen Ansicht, eine elliptische Form ergeben.

Nach einer besonders vorteilhaften Ausgestaltung wird hierbei neben der Kraftschlussverbindung durch Dübel und Stift im montierten Zustand, auch eine Formschlussverbindung herbeigeführt, die insbesondere die Verdrehsicherung des Stiftes in dem Dübel, sowie eine Sicherung gegen ein selbsttätiges Lösen der Verbindung bewirkt. Somit wird sichergestellt, dass infolge der auftretenden Schwingungen ein sich selbst Losrattern der Verbindung unterbunden wird, da beide Teile, Dübel und Stift, durch eine Formschlussverbindung in ihrer Kraft übertragenden Verbindung gehalten werden. Ferner ist der Dübel derart ausgebildet, dass er im eingesetzten Zustand eine Formschlussverbindung mit den Laschen eingeht.

Dabei besteht in zweckmäßiger Weise die Formschlussverbindung aus einer am freien Ende des Stiftes angeformten Scheibe, in der sichelförmige Kulissenführungen angeordnet sind, die mit am Kragenhals des Hülsenkörpers angeformten Zapfen zusammenwirken. Somit bilden Zapfen und Scheibe eine Verbindung, die insbesondere die kontrollierte 90°-Drehung des Stiftes in dem Hülsenkörper zulässt. Zur Sicherung sind die Kulissenführungen als Klemmrasten ausgebildet. Dabei ist die Klemmraste jeweils endseitig an der ein Bogenmaß von 90° einnehmenden Kulissenführung angeordnet. Die Klemmraste als solches ist hierbei aus teilkreisförmigen Ausnehmungen an den nach außen weisenden Kulissenwänden ausgebildet. An den nach innen weisenden Kulissenwänden ist jeweils endseitig ein Anschlag für die Zapfen angeformt. In Wirkverbindung mit den Klemmrasten ist jeweils der sich zwischen den Kulissenwänden erstreckende Spaltraum über das Bogenmaß verjüngt ausgebildet. Um insbesondere hier die gewünschte Federwirkung der Klemmrasten zu bewirken, schließt sich an den Spaltraum ein Dehnspalt zur Ausbildung einer elastisch federnden äußeren Kulissenwand an. Es versteht sich nun von selbst, dass, wenn der Stift in den vormontierten Dübel eingesetzt ist, die Zapfen in die Kulissenführungen greifen, wobei dann durch Drehen der Scheibe die Kulisse sich mit ihren Klemmrasten auf den stehenden Zapfen bewegt und infolge des sich verengenden Raumes die Zapfen in die Klemmrasten springen, wobei in Dehnung der äußeren Kulissenwände die Verrastung herbeigeführt wird, so dass in Zusammenwirken von teilkreisförmiger Ausnehmung und Anschlag eine exakte 90°-Drehung vorgenommen wird, die die kraftschlüssige Verbindung herstellt, wobei im eingerasteten Zustand der Zapfen in den Klemmrasten auch die Formschlussverbindung der Teile zueinander hergestellt wird.

Nach einer besonders vorteilhaften Ausgestaltung der Erfindung ist in der Drehachse der Scheibe zur Betätigung des Stiftes eine Werkzeugaufnahme, wie ein Innensechskant oder Torx, vorgesehen, mittels dem die Drehbetätigung des Stiftes vorgenommen werden kann. Zur Weiterbildung insbesondere der Formschlussverbindung, und hier der Formschlussverbindung des Stiftes gegenüber dem Dübel, ist für den Stift im Bereich des Kragenhalses des Dübels eine Sicherung gegen selbsttätiges koaxiales Auswandern des Stiftes aus dem Hülsenkörper angeordnet. Hierzu besteht die Sicherung aus einer an der Stiftwand angeformten Wulst, die mit einem Hinterschnitt an der Innenwand des Kragenhalses zusammenwirkt. Somit wird gewährleistet, dass neben dem Selbstzurückdrehen des Stiftes infolge der Klemmrasten, auch ein Auswandern des Stiftes aus dem Hülsenkörper vermieden wird. In Weiterbildung der Formschlussverbindung, ist für den Dübel im Bereich des Kragenhalses die Sicherung gegen selbsttätiges Auswandern des Dübels aus der Verbindung zwischen Befestigungsauge und Lasche angeordnet. Diese umfasst am Kragenhals eine Anschlagplatte, an der zwei Hakenrasten angeformt sind, die im montierten Zustand des Dübels eingeformte Nuten an den Laschen hintergreifen. Somit wird eine feste Positionierung des Dübels am Laugenkörper bewerkstelligt, wobei auch hierdurch der Dübel gegen Verdrehung und Auswanderung gesichert wird.

In einer anderen Ausführung ist für den Dübel im Bereich des freien eine oder mehrere angeformte Rastnasen die Sicherung gegen selbsttätiges Auswandern des Dübels aus der Verbindung zwischen Befestigungsauge und Laschen angeordnet. Dies hat den Vorteil, dass beim Einstecken eine federne Verrastung bereitgestellt wird, die durch den nachträglich eingesteckten Stift blockiert und der Dübel dadurch in den Aufnahmelaschen gesichert wird. Der Stift umfasst in dieser Ausführung an seinem freien Ende eine pilzförmige Verdickung zur Verrastung des Stiftes im Dübel, wobei der Dübel auf der stirnseitigen Fläche um die Einstecköffnung eine bogenförmige, ansteigende Bahn mit einer Rastkante an ihrem Ende für eine korrespondierende, bogenförmige Aussparung an der am Stift angeformten Scheibe umfasst. Somit wird aufgrund der ansteigenden Bahn auf den Stift eine Axialkraft entgegen der Einsteckrichtung bewirkt, wobei der Stift mit seiner pilzförmigen Verdickung im Dübel positioniert wird bzw. gehalten wird. Am Ende des Verdrehweges verrastet die Aussparung der Kulisse an der Scheibe des Stiftes mit der Kante am Ende der bogenförmigen Bahn am stirnseitigen Ende des Dübels. Wie bereits oben erwähnt, ist der Stift für eine Vierteldrehung ausgebildet, sodass auch die Rastkulissen dazu eingerichtet sind, den Stift nach einer Vierteldrehung des innerhalb des Dübels im Dübel in der Position zu verrasten, damit der Stift blockiert ist und gegen eine Zurückdrehen gesichert ist.

Nach einer besonders vorteilhaften Ausgestaltung der Erfindung sind hierbei Dübel und Stift jeweils aus einstückig geformten Kunststoffformteilen hergestellt, so dass die die Verbindung herstellenden Elemente kostengünstig herzustellen sind.

In Ausgestaltung der Verbindungselemente wird eine leichte, schnelle und sichere Montage bereitgestellt, die, wie bereits erwähnt, neben einer Kraftschlussverbindung auch die Formschlussverbindung zwischen den Teilen bewirkt. Hierzu bilden Dübel und Stift eine vormontierte Einheit, wobei der Stift in den Dübel zumindest teilweise eingesteckt ist.

Ein Ausführungsbeispiel der Erfindung ist in den Zeichnungen rein schematisch dargestellt und wird nachfolgend näher beschrieben. Es zeigen:
- Figur 1: eine geschnittene Seitenansicht einer Wäschebehandlungsmaschine;
- Figur 2: eine perspektivische Darstellung in explosionsartiger Darstellung des Verbindungselementes bestehend aus Dübel und Stift;
- Figur 3: eine erste Situation des Verbindungselementes in der verspannten Situation;
- Figur 4: eine zweite Situation des Verbindungselementes, gemäß der Figur 3 in der entspannten Situation;
- Figur 5: eine Ansicht auf die Scheibe des Verbindungselementes ebenfalls in der entspannten Situation;
- Figur 6: eine geschnittene Ansicht des Verbindungselementes in Verbindung mit den Laschen des Laugenbehälters;
- Figur 7: eine weitere geschnittene Darstellung des Verbindungselementes, ebenfalls in Wirkverbindung mit den Laschen am Laugenbehälter und
- Figur 8 bis 11: eine andere Ausführung des Verbindungselementes.

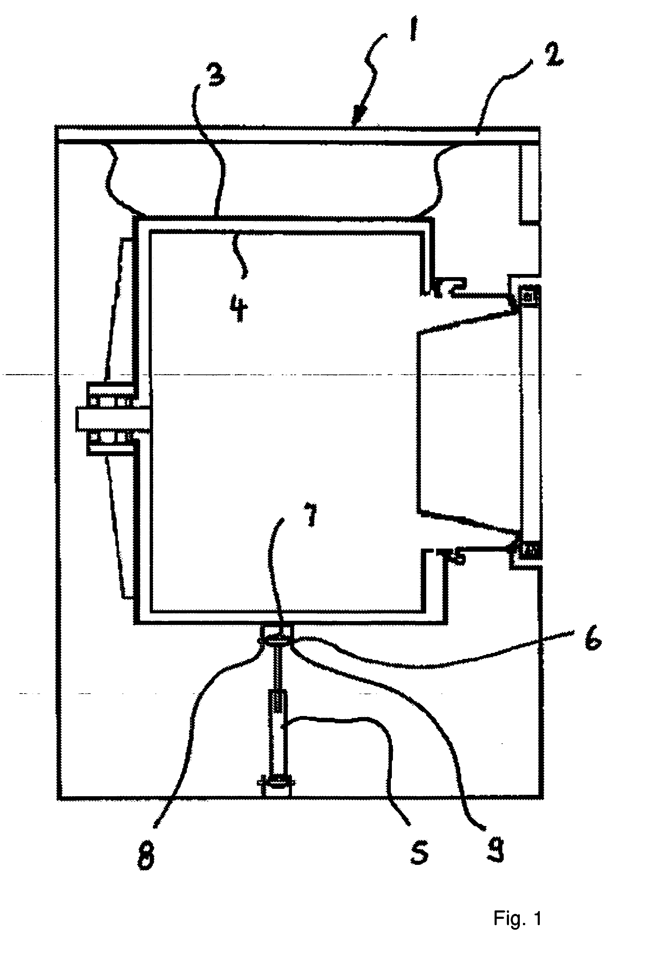

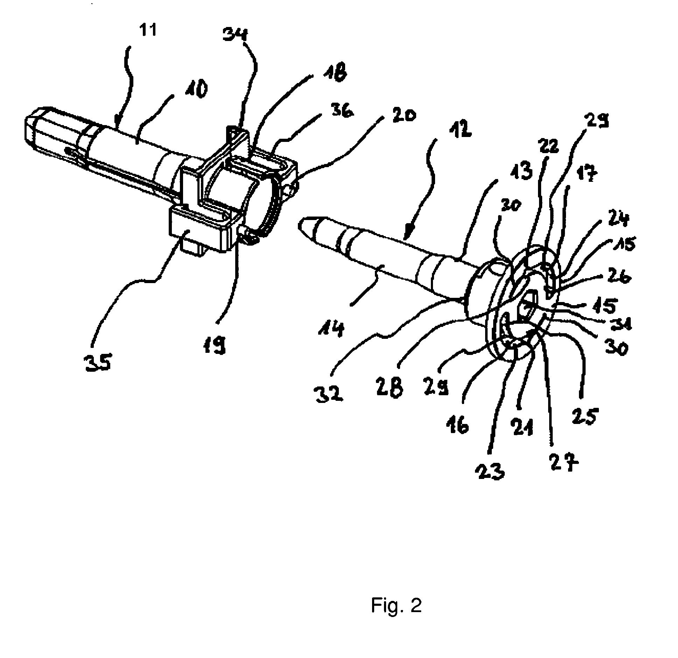

Die Figur 1 zeigt in der geschnittenen Ansicht eine Waschmaschine 1, welche ein Gehäuse 2 umfasst, in dem ein Waschaggregat, bestehend aus einem Laugenbehälter 3 und einer darin drehbar gelagerten Trommel 4, angeordnet ist. Dabei befindet sich unterhalb des Laugenbehälters 3 ein Schwingungsdämpfer 5, der über ein Verbindungselement 6 mit dem Laugenbehälter 3 verbunden ist. Das Verbindungselement 6 durchdringt hierbei im eingesetzten Zustand ein Befestigungsauge 7 des Schwingungsdämpfers 5, sowie beidseits angeordnete Laschen 8, 9 am Laugenbehälter 3, und wobei infolge einer Spreizung des Verbindungselementes 6 im montierten Zustand eine verspannende Kraftübertragung zwischen dem Befestigungsauge 7 und den Laschen 8, 9 bewirkt wird. Wie sich das Verbindungselement 6 im Einzelnen in seiner Funktionsweise und in seiner Ausgestaltung darstellt, ist insbesondere aus den Figuren 2 bis 7 näher zu erkennen.

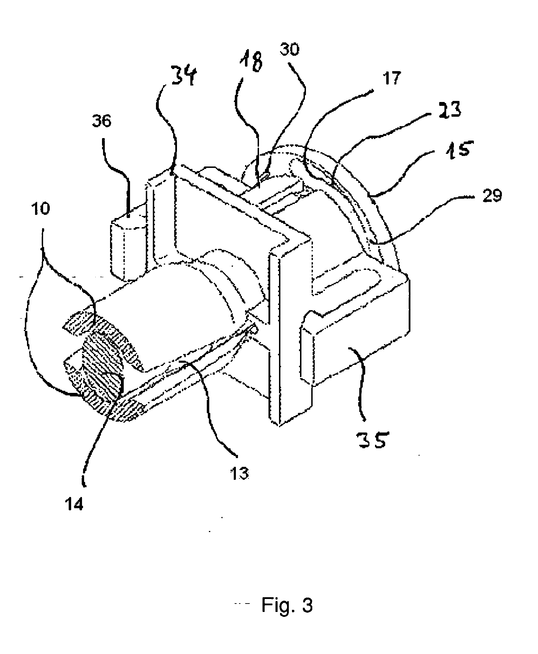

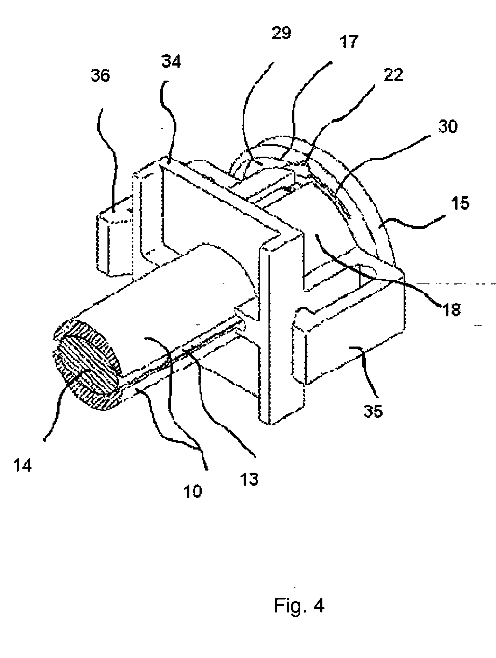

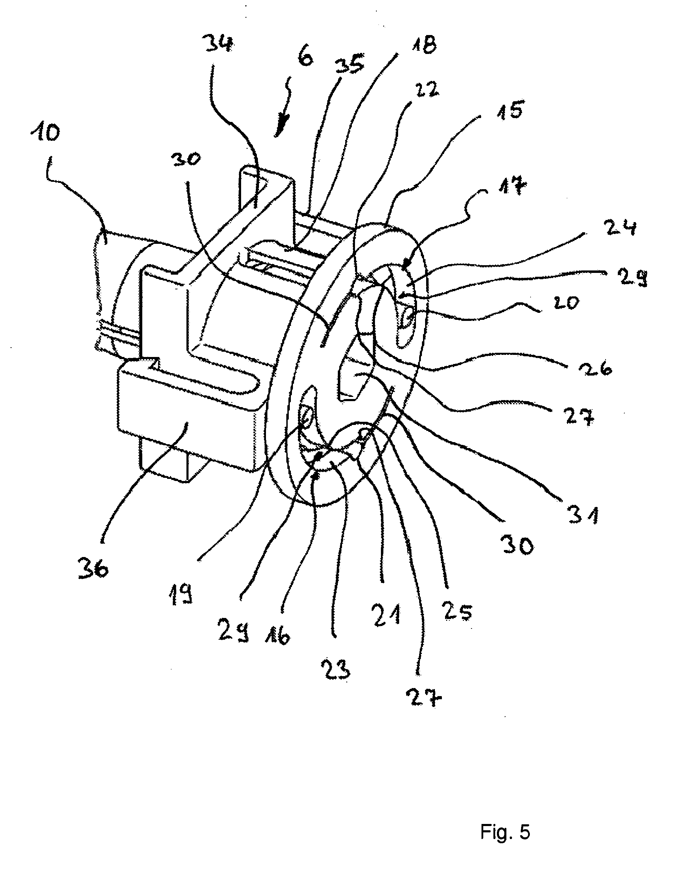

So ist aus der Figur 2 in der perspektivischen explosionsartigen Darstellung zu erkennen, dass das Verbindungselement 6 aus einem als Hülsenkörper mit elliptisch geformter Wand 10 ausgebildeten Dübel 11 besteht, in den ein als Stift 12 mit elliptischem Querschnitt 14 ausgebildeter Spreizkörper 13 einsteckbar ist. Der Spreizkörper 13 mit seinem elliptischen Querschnitt 14 ist in dem als Hülsenkörper ausgebildeten Dübel 11 durch eine zumindest etwa 90°-Drehung des Stiftes 12 in dem Hülsenkörper drehbar angeordnet, wobei infolge der 90°-Drehung hier die verspannende Kraftübertragung erfolgt. Dies ist insbesondere gut zu erkennen in der Zusammenschau der Figuren 3 und 4, wobei die Figur 3 die verspannte Situation darstellt, also wo der Stift um die 90 ° gedreht ist, so dass der elliptisch geformte Querschnitt 14 senkrecht steht, wohingegen in der Figur 4 der Stift 12 in der entspannten Situation steht, und hier der elliptische Querschnitt 14 des Spreizkörpers 13 waagerecht liegt. Wie insbesondere aus der Zusammenschau der Figuren 5, 6 und 7 zu erkennen ist, bilden Dübel 11 und Stift 12 im montierten Zustand neben der Kraftschlussverbindung, wie dies in den Figuren 3 und 4 dargestellt ist, auch eine Formschlussverbindung, die eine Verdrehsicherung des Stiftes 12 in dem Dübel 11, sowie eine Sicherung gegen ein selbsttätiges Lösen der Verbindungsteile bewirkt.

Dabei besteht die Formschlussverbindung aus einem ersten Teil, welcher aus einer am freien Ende des Stiftes 12 angeformten Scheibe 15 besteht, in der sichelförmige Kulissenführungen 16, 17 angeordnet sind, die mit am Kragenhals 18 des Dübels 11 angeformten Zapfen 19, 20 zusammenwirken. Die Kulissenführungen 16, 17 sind hierbei als Klemmrasten 21, 22 zur Bildung einer Verdrehsicherung ausgebildet. Die Klemmrasten 21, 22 sind jeweils endseitig an der ein Bogenmaß von 90° einnehmenden Kulissenführung 16, 17 vorgesehen, wie dies insbesondere in der Figur 2, aber auch in der Figur 5 deutlich zu erkennen ist. Wie insbesondere aus der Figur 2, aber auch aus der Figur 5 zu erkennen ist, wo die Scheibe 15 im Wesentlichen in Frontansicht dargestellt ist, sind die Klemmrasten 21, 22 aus teilkreisförmigen Ausnehmungen gebildet, die an den nach außen weisenden Kulissenwänden 23, 24 angeordnet sind. Gegenüberliegend von den Ausnehmungen sind an den nach innen weisenden Kulissenwänden 25, 26 endseitig jeweils ein Anschlag 27, 28 für die Zapfen 19, 20 vorgesehen. Wie aus der Figur 2 deutlich zu erkennen ist, ist jeweils der zwischen den Kulissenwänden 23, 25 bzw. 24, 26 sich erstreckende Spaltraum 29 über das Bogenmaß verjüngt ausgebildet. Dabei schließt sich an den Spaltraum 29 ein Dehnspalt 30 an, der insbesondere zur elastischen federnden Ausbildung der jeweils äußeren Kulissenwand 23, 24 bestimmt ist. Es versteht sich nun von selbst, dass sich die Wirkung der Verdrehsicherung wie folgt einstellt, wobei zunächst der Stift 12 in der Situation der Figur 4, in den Dübel 11 eingeführt wird, und der Stift 12 in den Dübel 11 soweit eindringt, dass die Zapfen 19, 20 in die Kulissenführungen 16, 17 greifen, und in diesen geführt werden. Durch Betätigung des Stiftes 12 mittels eines Werkzeugs, welches in den in der Drehachse der Scheibe 15 angeordneten Innensechskant 31 angesetzt werden kann, wird der Stift 12 um eine 90°-Drehung verschwenkt, so dass die Zapfen 19, 20 bis an die Anschläge 27, 28 anschlagen, und wobei in dieser Situation die Klemmrasten 21, 22 in Wirkverbindung treten, und zwar in der Weise, dass die halbkreisförmigen Ausnehmungen sich um die Zapfen 19, 20 legen. Diese Situation ergibt sich dann in der Darstellung der Figur 3, wo die Verspannsituation dargestellt ist. Somit wird die Verdrehsicherung erreicht, so dass ein sich selbst Zurückdrehen des Stiftes 12 im Dübel 11 unterbunden wird.

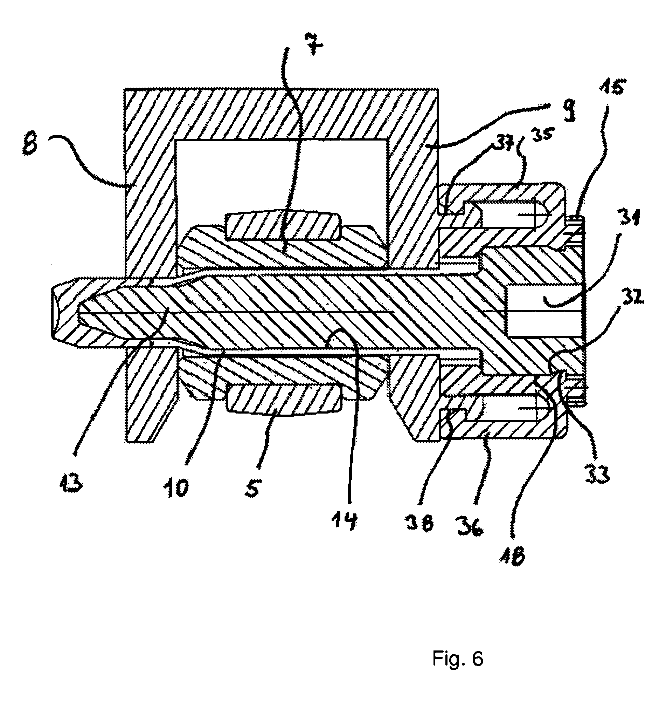

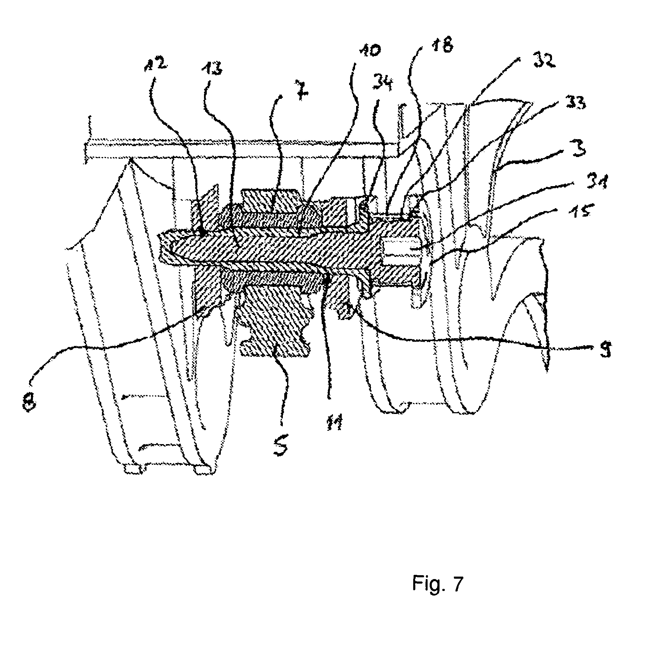

In vorteilhafter Weiterbildung ist für den Stift 12 im Bereich des Kragenhalses 18 des Dübels 11 weiter eine Sicherung gegen selbsttätiges Auswandern des Stiftes 12 aus dem Hülsenkörper vorgesehen. Diese Sicherung ist insbesondere in den Figuren 6 und 7 näher zu erkennen, wobei die Sicherung aus einer an der Stiftwand angeformten Wulst 32 besteht, die mit einem Hinterschnitt 33 an der Innenwand des Kragenhalses 18 zusammenwirkt. Somit wird unterbunden, dass der Stift 12 aus seiner Axiallage im verspannten Zustand auswandern kann. Als weitere sichernde Formschlussverbindung, welche insbesondere ein Auswandern des Dübels 11 verhindern soll, ist für den Dübel 11 im Bereich des Kragenhalses 18 eine Sicherung gegen selbsttätiges Auswandern des Dübels 11 aus der Verbindung zwischen Befestigungsauge 7 und Laschen 8, 9 vorgesehen. Diese Sicherungseinrichtung besteht im Besonderen aus einer am Kragenhals 18 des Dübels 11 angeordneten Anschlagplatte 34, an der zwei Rasthaken 35, 36 angeordnet sind, die im montierten Zustand des Dübels 11 in eingeformten Nuten 37, 38 an der jeweiligen Lasche 8, 9 eingreifen bzw. diese hintergreifen. Diese Situation ist insbesondere in der Figur 6 erkennbar, wo der Dübel 11 in der eingesetzten Situation mit seinen Rasthaken 35, 36 in die eingeformten Nuten 37, 38 greift. Aufgrund dieser Ausbildung wird erreicht, dass neben einer Kraftübertragung eine sichernde Formschlussverbindung bereit gestellt wird, die eine Verdrehsicherung in Radial- und Axialrichtung für den Dübel 11 gewährleistet. Diese Verbindung des Dübels 11 mit dem Laugenbehälter 3 ermöglicht zudem ein sicheres Montieren des Verbindungselementes 6.

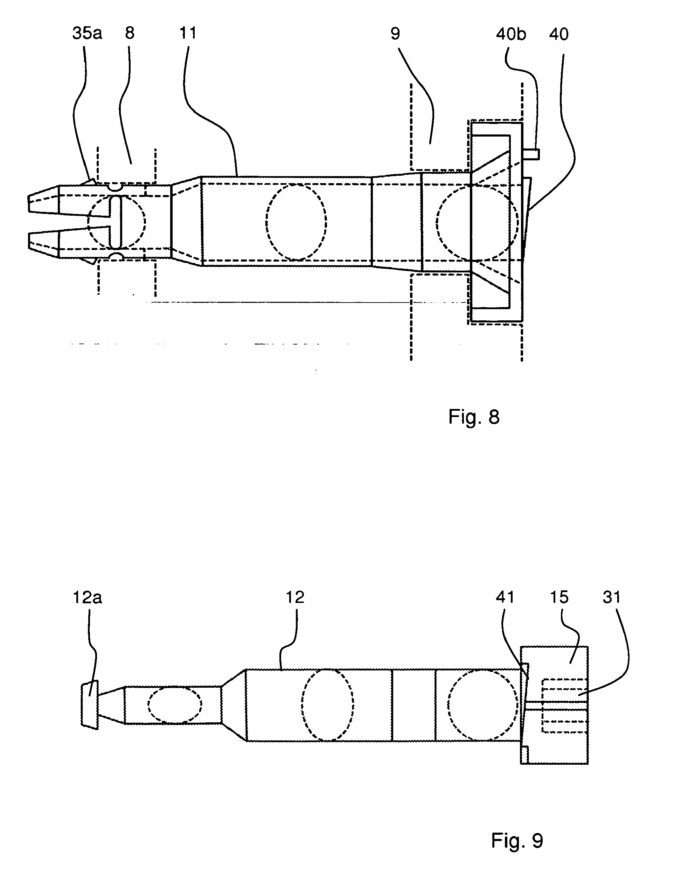

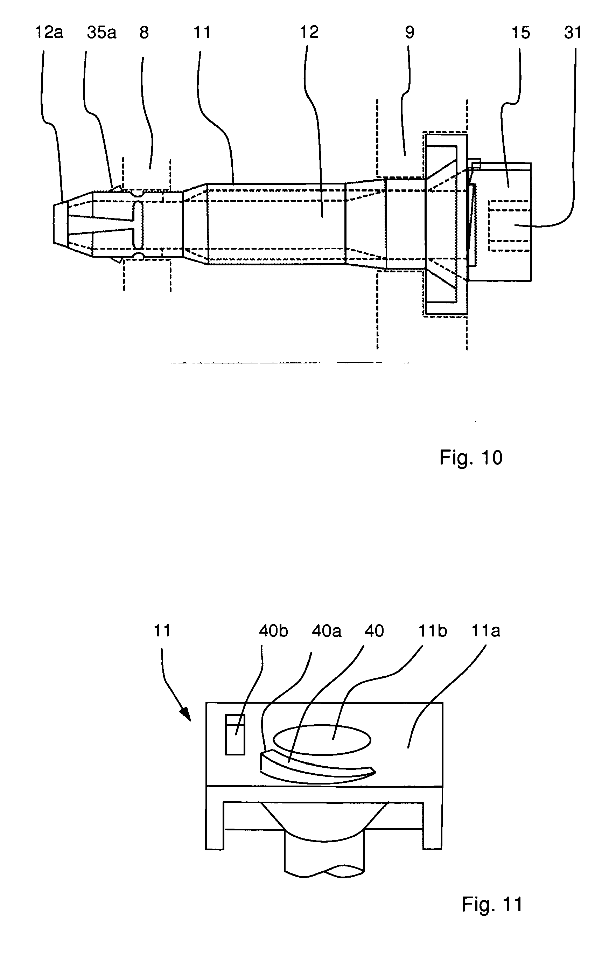

Fig. 8 zeigt eine andere Ausführung, bei der für den Dübel im Bereich des freien eine oder mehrere angeformte Rastnasen 35a die Sicherung gegen selbsttätiges Auswandern des Dübels 11 aus der Verbindung zwischen Befestigungsauge 7 und Laschen 8, 9 angeordnet. Fig. 9 zeigt den entsprechenden Stift 12 dazu und Fig. 10 zeigt die Situation des Dübels 11 mit eingesetztem und verrasteten Stift 12. Diese Ausführung hat des Vorteil, dass beim Einstecken eine federne Verrastung bereitgestellt wird, die durch den nachträglich eingesteckten Stift 12 blockiert und der Dübel 11 dadurch gesichert wird. Der Stift 12 umfasst in dieser Ausführung an seinem freien Ende eine pilzförmige Verdickung 12a zur Verrastung des Stiftes 12 im Dübel 11, wobei der Dübel 11 auf der stirnseitigen Fläche 11 a um die Einstecköffnung 11 beine bogenförmige, ansteigende Bahn 40 mit einer Rastkante 40a an ihrem Ende für eine korrespondierende, bogenförmige Aussparung 41 an der am Stift 12 angeformten Scheibe 15 umfasst. Somit wird aufgrund der anstegenden Bahn 40 auf den Stift 12 eine Axialkraft entgegen der Einsteckrichtung bewirkt, wobei der Stift 12 mit seiner pilzförmigen Verdickung 12a im Dübel 11 positioniert wird bzw. gehalten wird. Am Ende des Verdrehweges verrastet die Aussparung 41 der Kulisse an der Scheibe 15 des Stiftes 12 mit der Kante 40a am Ende der bogenförmigen Bahn 40 am stirnseitigen Ende 11a des Dübels 11. Wie bereits oben erwähnt, ist der Stift 12 für eine Vierteldrehung ausgebildet, sodass auch die Rastkulissen 40, 41 dazu eingerichtet sind, den Stift 12 nach etwa einer Vierteldrehung innerhalb des Dübels 11 in der Position zu verrasten, wodurch ein Zurückdrehen des Stiftes 12 verhindert wird. An der Stirnfläche des Dübels 11 befinde sich ferner eine Anformung 40b, die im Zusammenspiel mit der Formgebung der Scheibe 15 am Stift 12 einen Anschlag für den Drehwinkel des Stiftes 12 bereitstellt.

Fig. 11 zeigt im Detail in einer perspektivischen, skizzierten Ansicht die Kulissenbahn 40 am stirnseitigen Ende des Dübels 11, die entsprechend mit der kulissenartigen Aussparung 41 an der Scheibe 15 am Stift 12 korrespondiert.

## Patentansprüche

1. Verbindungselement (6) für einen Schwingungsdämpfer (5), der zur gedämpften Festlegung eines in einem Gehäuse (2) einer Wäschebehandlungsmaschine (1) angeordneten Laugenbehälters (3) mit drehbar gelagerter Trommel (4) vorgesehen ist, wobei das Verbindungselement (6) im eingesetzten Zustand ein Befestigungsauge (7) des Schwingungsdämpfers (5) sowie beidseits angeordnete Laschen (8, 9) am Laugenbehälter (3) durchdringt und wobei eine Spreizung des Verbindungselements (6) im montierten Zustand eine verspannende Kraftübertragung zwischen dem Befestigungsauge (7) und den Laschen (8, 9) bewirkt,
**dadurch gekennzeichnet,**
**dass** das Verbindungselement (6) aus einem als Hülsenkörper (10) ausgebildeten Dübel (11) besteht, wobei der Hülsenkörper (10) im Querschnitt eine elliptische Öffnung zur Aufnahme des Spreizkörpers (13) umfasst, so dass die inneren Flächen der Wände elliptisch geformt sind, in den ein als Stift (12) mit elliptischen Querschnitt (14) ausgebildeter Spreizkörper (13) einsteckbar ist, der ferner dazu ausgebildet ist, durch eine zumindest etwa 90° Drehung des Stiftes (12) in dem Hülsenkörper (10) eine Aufdickung des Hülsenkörpers (10) zu erwirken, wodurch die verspannende Kraftübertragung zwischen Befestigungsauge (7) und Laschen (8, 9) erfolgt.

2. Verbindungselement nach Anspruch 1,
**dadurch gekennzeichnet,**
**dass** Dübel (11) und Stift (12) im montierten Zustand neben der Kraftschlussverbindung auch eine Formschlussverbindung bilden, die eine Verdrehsicherung des Stiftes (12) in dem Dübel (11) sowie eine Sicherung gegen ein selbsttätiges Lösen der Verbindungsteile bewirkt, wobei der Dübel (11) eine Formschlussverbindung mit den Laschen (8, 9) eingeht.

3. Verbindungselement nach Anspruch 2,
**dadurch gekennzeichnet,**
**dass** die Formschlussverbindung aus einer am freien Ende des Stiftes (12) angeformten Scheibe (15) besteht, in der sichelförmige Kulissenführungen (16, 17) angeordnet sind, die mit am Kragenhals (18) des Hülsenköpers angeformten Zapfen (19, 20) zusammenwirken.

4. Verbindungselement nach Anspruch 3,
**dadurch gekennzeichnet,**
**dass** die Kulissenführungen (16, 17) als Klemmrasten (21, 22) zur Bildung einer Verdrehsicherung ausgebildet sind.

5. Verbindungselement nach Anspruch 4,
**dadurch gekennzeichnet,**
**dass** die Klemmrasten (21, 22) jeweils endseitig an den ein Bogenmaß von 90° einnehmenden Kulissenführungen (16, 17) angeordnet sind.

6. Verbindungselement nach Anspruch 5,
**dadurch gekennzeichnet,**
**dass** die Klemmrasten (16, 17) aus teilkreisförmigen Ausnehmungen an den nach außen weisenden Kulissenwänden (23, 24) gebildet sind.

7. Verbindungselement nach Anspruch 6,
**dadurch gekennzeichnet,**
**dass** an den nach innen weisenden Kulissenwänden (25, 26) endseitig jeweils ein Anschlag (27, 28) für die Zapfen (19, 20) eingeformt ist.

8. Verbindungselement nach Anspruch 7,
**dadurch gekennzeichnet,**
**dass** jeweils der sich zwischen den Kulissenwänden (23, 24) und (25, 26) erstreckende Spaltraum (29) über das Bogenmaß verjüngt ausgebildet ist.

9. Verbindungselement nach Anspruch 8,
**dadurch gekennzeichnet,**
**dass** sich an den Spaltraum (29) ein Dehnspalt (30) zur Ausbildung einer elastisch federnden äußeren Kulissenwand (23, 24) anschließt.

10. Verbindungselement nach Anspruch 3,
**dadurch gekennzeichnet,**
**dass** in der Drehachse der Scheibe (15) zur Betätigung des Stiftes (12) eine Werkzeugaufnahme (31) angeordnet ist.

11. Verbindungselement nach Anspruch 2,
**dadurch gekennzeichnet,**
**dass** für den Stift (12) im Bereich des Kragenhalses (18) des Dübels (11) die Sicherung gegen selbsttätiges Auswandern des Stiftes (12) aus dem Hülsenkörper angeordnet ist.

12. Verbindungselement nach Anspruch 11,
**dadurch gekennzeichnet,**
**dass** die Sicherung aus einer an der Stiftwand angeformten Wulst (32) besteht, die mit einem Hinterschnitt (33) an der Innenwand des Kragenhalses (18) zusammenwirkt.

13. Verbindungselement nach Anspruch 2,
**dadurch gekennzeichnet,**
**dass** für den Dübel (11) im Bereich des Kragenhalses (18) die Sicherung gegen selbsttätiges Auswandern des Dübels (11) aus der Verbindung zwischen Befestigungsauge (7) und Laschen (8, 9) angeordnet ist.

14. Verbindungselement nach Anspruch 13,
**dadurch gekennzeichnet,**
**dass** die Sicherung am Kragenhals (18) des Dübels (11) eine Anschlagplatte (34) umfasst, an der zwei Hakenrasten (35, 36) angeformt sind, die im montierten Zustand des Dübels (11) eingeformte Nuten (37, 38) an der Lasche (8, 9) hintergreifen.

15. Verbindungselement nach Anspruch 2,
**dadurch gekennzeichnet,**
**dass** für den Dübel (11) im Bereich des freien Endes eine oder mehrere angeformte Rastnasen (35a) die Sicherung gegen selbsttätiges Auswandern des Dübels (11) aus der Verbindung zwischen Befestigungsauge (7) und Laschen (8, 9) angeordnet ist.

16. Verbindungselement nach Anspruch 15,
**dadurch gekennzeichnet,**
**dass** der Stift (12) an seinem freien Ende eine pilzförmige Verdickung (12a) umfasst zur eine Verrastung des Stiftes (12) im Dübel (11), wobei der Dübel (11) auf der stirnseitigen Fläche (11a) um die Einstecköffnung (11b) eine bogenförmige, ansteigende Bahn (40) mit einer Rastkante (40a) umfasst, die für die Anlage und Verrastung mit einer korrespondierende, bogenförmige Aussparung (41) an der am Stift (12) angeformten Scheibe (15) umfasst.

17. Verbindungselement nach Anspruch 16,
**dadurch gekennzeichnet,**
**dass** die bogenförmige Bahn (40) und die bogenförmige Aussparung (41) dazu ausgebildet sind, eine Verrastung des Stiftes (12) nach einer etwa Vierteldrehung innerhalb des Dübels (11) zu bewirken.

18. Verbindungselement nach Anspruch 1,
**dadurch gekennzeichnet,**
**dass** Dübel (11) und Stift (12) jeweils aus einstückig geformten Kunststoffformteilen hergestellt sind.

19. Verbindungselement nach Anspruch 1,
**dadurch gekennzeichnet,**
**dass** Dübel (11) und Stift (12) eine vormontierte Einheit bilden, wobei der Stift (12) in den Dübel (11) zumindest teilweise eingesteckt ist.

## Claims

1. Connection element (6) for a vibration damper (5) which is provided for fixing a suds container (3), which is arranged in a housing (2) of a laundry treatment appliance (1), in a damped manner, said suds container comprising a rotatably mounted drum (4), the connection element (6), when inserted, penetrating a fastening eye (7) of the vibration damper (5) and brackets (8, 9) arranged on both sides of the suds container (3), expansion of the connection element (6), when assembled, causing a bracing force transmission between the fastening eye (7) and the brackets (8, 9),
**characterised in that**
the connection element (6) consists of a dowel (11) formed as a sleeve element (10), the sleeve element (10) comprising an elliptical opening in cross-section for retaining the expanding element (13), so that the inner surfaces of the walls are elliptical in shape, into which dowel an expanding element (13) formed as a pin (12) having an elliptical cross-section (14) can be inserted, which expanding element is further formed so as to cause thickening of the sleeve element (10) by means of rotation of the pin (12) in the sleeve element (10) through at least approximately 90°, bringing about the bracing force transmission between the fastening eye (7) and the brackets (8, 9).

2. Connection element according to claim 1, **characterised in that** when assembled, in addition to the non-positive connection, the dowel (11) and the pin (12) also form a positive connection which provides antitwist protection of the pin (12) in the dowel (11) and protection against the connection parts loosening automatically, the dowel (11) forming a positive connection with the brackets (8, 9).

3. Connection element according to claim 2, **characterised in that** the positive connection consists of a disc (15) which is integrally formed on the free end of the pin (12) and in which crescent-shaped rocker-arm guides (16, 17) are arranged, which cooperate with pins (19, 20) integrally formed on the collar neck (18) of the sleeve element.

4. Connection element according to claim 3, **characterised in that** the rocker-arm guides (16, 17) are formed as clips (21, 22) for providing antitwist protection.

5. Connection element according to claim 4, **characterised in that** the clips (21, 22) are each arranged at the ends of the rocker-arm guides (16, 17), which cover an arc length of 90°.

6. Connection element according to claim 5, **characterised in that** the clips (16, 17) are formed from part-circle-shaped recesses on the outward-facing rocker-arm walls (23, 24).

7. Connection element according to claim 6, **characterised in that** a stop (27, 28) for each of the pins (19, 20) is moulded on the ends of the inward-facing rocker-arm walls (25, 26).

8. Connection element according to claim 7, **characterised in that** each of the gaps (29) extending between the rocker-arm walls (23, 24) and (25, 26) is formed tapering over the arc length.

9. Connection element according to claim 8, **characterised in that** an expansion gap (30) connects to the gap (29) so as to form a resiliently flexible outer rocker-arm wall (23, 24).

10. Connection element according to claim 3, **characterised in that** a tool retainer (31) is arranged in the axis of rotation of the disc (15) for activating the pin (12).

11. Connection element according to claim 2, **characterised in that** for the pin (12), protection against the pin (12) automatically drifting out of the sleeve element is arranged in the region of the collar neck (18) of the dowel (11).

12. Connection element according to claim 11, **characterised in that** the protection consists of a bead (32) integrally formed on the pin wall, which bead cooperates with a rear portion (33) on the inner wall of the collar neck (18).

13. Connection element according to claim 2, **characterised in that** for the dowel (11), protection against the dowel (11) automatically drifting out of the connection between the fastening eye (7) and the brackets (8, 9) is arranged in the region of the collar neck (18).

14. Connection element according to claim 13, **characterised in that** the protection on the collar neck (18) of the dowel (11) comprises a stop plate (34), on which two hook locks (35, 36) are integrally formed, which engage moulded grooves (37, 38) on the brackets (8, 9) from behind when the dowel (11) is assembled.

15. Connection element according to claim 2, **characterised in that** for the dowel (11), one or more integrally formed locking projections (35a) are arranged in the region of the free end as protection against the dowel (11) automatically drifting out of the connection between the fastening eye (7) and the brackets (8, 9).

16. Connection element according to claim 15, **characterised in that** the pin (12), at the free end thereof, comprises a mushroom-shaped thickening (12a) for locking the pin (12) in the dowel (11), the dowel (11) comprising a arc-shaped, rising path (40) comprising a catch edge (40a) on the end face (11a) around the insertion opening (11b), which catch edge is provided for placing against and locking with a corresponding arc-shaped recess (41) on the disc (15) integrally formed on the pin (12).

17. Connection element according to claim 16, **characterised in that** the arc-shaped path (40) and the arc-shaped recess (41) are formed so as to cause the pin (12) to lock inside the dowel (11) after approximately a quarter turn.

18. Connection element according to claim 1, **characterised in that** the dowel (11) and the pin (12) are produced from plastics material moulded parts which are each formed in one piece.

19. Connection element according to claim 1, **characterised in that** the dowel (11) and the pin (12) form a pre-assembled unit, the pin (12) being at least partially inserted into the dowel (11).

## Revendications

1. Elément de raccordement (6) pour un amortisseur de vibrations (5) qui est prévu pour la fixation amortie d'une cuve de lessivage (3) disposée dans un carter (2) d'une machine de traitement du linge (1) avec un tambour (4) supporté en rotation, l'élément de raccordement (6) pénétrant, dans l'état introduit, dans un oeillet de fixation (7) de l'amortisseur de vibrations (5) ainsi que dans des pattes (8, 9), disposées des deux côtés, sur la cuve de lessivage (3), et un écartement de l'élément de raccordement (6) dans l'état monté provoquant une transmission de force de haubanage entre l'oeillet de fixation (7) et les pattes (8, 9),
**caractérisé en ce que**
l'élément de raccordement (6) est composé d'une cheville (11) constituée en tant que corps de douille (10), le corps de douille (10) comprenant dans la section transversale une ouverture elliptique pour recevoir le corps d'écartement (13) de sorte que les surfaces intérieures des parois sont formées de façon elliptique, dans lequel peut être enfiché un corps d'écartement (13) constitué en tant que broche (12) avec une section transversale (14) elliptique et qui est en outre constitué pour susciter une surépaisseur du corps de douille (10) par une rotation d'au moins 90° par exemple de la broche (12) dans le corps de douille (10), ce qui fait que la transmission de force de haubanage s'effectue entre l'oeillet de fixation (7) et les pattes (8, 9).

2. Elément de raccordement selon la revendication 1,
**caractérisé en ce que**
la cheville (11) et la broche (12) forment, dans l'état monté, outre la liaison par friction également une liaison mécanique qui provoque un blocage anti-torsion de la broche (12) dans la cheville (11) ainsi qu'un blocage contre un desserrement automatique des pièces de raccordement, la cheville (11) réalisant une liaison mécanique avec les pattes (8, 9).

3. Elément de raccordement selon la revendication 2,
**caractérisé en ce que**
la liaison mécanique se compose d'un disque (15) formé sur l'extrémité de la broche (12) dans lequel sont disposés des guides de coulisse (16, 17) en forme de faucille qui coopèrent avec des tourillons (19, 20) formés sur le col (18) du corps de douille.

4. Elément de raccordement selon la revendication 3,
**caractérisé en ce que**
les guides de coulisse (16, 17) sont constitués en tant que crans de serrage (21, 22) pour la formation d'un blocage anti-torsion.

5. Elément de raccordement selon la revendication 4,
**caractérisé en ce que**
les crans de serrage (21, 22) sont respectivement disposés côté extrémité sur les guides de coulisse (16, 17) adoptant une mesure d'arc de 90°.

6. Elément de raccordement selon la revendication 5,
**caractérisé en ce que**
les crans de serrage (16, 17) sont formés d'évidements en forme de cercle primitif sur les parois de coulisses dirigées vers l'extérieur (23, 24).

7. Elément de raccordement selon la revendication 6,
**caractérisé en ce que**,
sur les parois de coulisses dirigées vers l'intérieur (25, 26), il est formé respectivement côté extrémité une butée (27, 28) pour les tourillons (19, 20).

8. Elément de raccordement selon la revendication 7,
**caractérisé en ce que**
respectivement l'espace interstitiel (29) s'étendant entre les parois de coulisses (23, 24) et (25, 26) est constitué en se rétrécissant sur la mesure d'arc.

9. Elément de raccordement selon la revendication 8,
**caractérisé en ce qu'**à l'espace interstitiel (29) se raccorde un interstice de dilatation (30) pour la constitution d'une paroi de coulisses extérieure (23, 24) assurant un effet de suspension élastique.

10. Elément de raccordement selon la revendication 3,
**caractérisé en ce**
**qu'**un logement d'outil (31) est disposé dans l'axe de rotation du disque (15) pour l'actionnement de la broche (12).

11. Elément de raccordement selon la revendication 2,
**caractérisé en ce que**,
pour la broche (12), le blocage contre une sortie automatique de la broche (12) hors du corps de douille est disposé dans la zone du col (18) de la cheville (11).

12. Elément de raccordement selon la revendication 11,
**caractérisé en ce que**
le blocage se compose d'un bourrelet (32) formé sur la paroi de broche et qui coopère avec une contre-dépouille (33) sur la paroi intérieure du col (18).

13. Elément de raccordement selon la revendication 2,
**caractérisé en ce que**,
pour la cheville (11), le blocage contre une sortie automatique de la cheville (11) hors du raccordement entre l'oeillet de fixation (7) et les pattes (8, 9) est disposé dans la zone du col (18).

14. Elément de raccordement selon la revendication 13,
**caractérisé en ce que**
le blocage sur le col (18) de la cheville (11) comprend une plaque de butée (34) sur laquelle sont formés deux crans à crochet (35, 36) qui, dans l'état monté de la cheville (11), viennent agripper par l'arrière des rainures (37, 38) formées sur la patte (8, 9).

15. Elément de raccordement selon la revendication 2,
**caractérisé en ce que**,
pour la cheville (11), un ou plusieurs becs d'encliquetage (35a) intégralement formés sont disposés dans la zone de l'extrémité libre comme blocage contre une sortie automatique de la cheville (11) hors du raccordement entre l'oeillet de fixation (7) et les pattes (8, 9).

16. Elément de raccordement selon la revendication 15,
**caractérisé en ce que**
la broche (12) comprend à son extrémité libre un épaississement (12a) en forme de champignon pour l'encliquetage de la broche (12) dans la cheville (11), la cheville (11) comprenant sur la surface (11a) côté frontal autour de l'ouverture d'insertion (11b) une piste (40) montante arquée avec une arête d'encliquetage (40a) qui est prévu pour l'appui sur et l'encliquetage avec un évidement (41) arqué correspondant sur le disque (15) formé sur la broche (12).

17. Elément de raccordement selon la revendication 16,
**caractérisé en ce que**
la piste (40) arquée et l'évidement (41) arqué sont constitués pour provoquer un encliquetage de la broche (12) après par exemple une rotation d'un quart de tour à l'intérieur de la cheville (11).

18. Elément de raccordement selon la revendication 1,
**caractérisé en ce que**
la cheville (11) et la broche (12) sont respectivement fabriquées à partir de pièces moulées en plastique formées d'une seule pièce.

19. Elément de raccordement selon la revendication 1,
**caractérisé en ce que**
la cheville (11) et la broche (12) forment une unité prémontée, la broche (12) étant insérée au moins partiellement dans la cheville (11).
